# EUROPEAN PATENT SPECIFICATION

(11) **EP 2 842 775 B1**
(45) Date of publication and mention of the grant of the patent: **27.04.2016**
(21) Application number: 14182216.3
(22) Date of filing: 26.08.2014
(51) Int. Cl.: B60C 23/12

(54) **Tire comprising a filter assembly**
Reifen mit einer Filteranordnung
Pneu comprenant un ensemble de filtre

(30) Priority: 30.08.2013 US 201361872164 P
(43) Date of publication of application: 04.03.2015
(73) Proprietor: The Goodyear Tire & Rubber Company, Akron, Ohio 44316 (US)
(72) Inventor: Benedict, Robert Leon, Tallmadge, OH Ohio 44278 (US); Landers, Samuel Patrick, North Canton, OH Ohio 44685 (US); Lin, Cheng-Hsiung, Hudson, OH Ohio 44236 (US); Chandra, Dinesh, Stow, OH 44224 (US); Welter, Carolin Anna, 54340 Schleich (DE); Gobinath, Thulasiram, Hudson, OH Ohio 44236 (US); Lamgaday, Robin, Wadsworth, OH 44281 (US); Marks, Patrick David, Uniontown, OH Ohio 44685 (US); Morris, Brian Richard, Uniontown, OH Ohio 44685 (US); Losey, Robert Allen, Kent, OH Ohio 44240 (US)
(74) Representative: Kutsch, Bernd

(56) References cited:
- EP-A1- 2 607 110
- EP-A1- 2 679 413

## Description

### Background of the Invention

The invention relates generally to tires and more specifically, to a tire comprising a filter assembly such as an air maintenance tire assembly comprising such a filer assembly.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain correct air pressure within the tire without a need for driver intervention to compensate for any reduction in tire pressure over time. It is useful to incorporate a filter in the design of an air maintenance tire system, so that the outside air is filtered before entering the system. The filter must be secured to the tire, and be able to sustain rotational forces. The filter must also be designed in such a way to minimize the stresses in the tire and allow for ease of assembly.

EP-A-2 607 110, which has been published only after the priority date of this application, describes a tire assembly in accordance with the preamble of claim 1.

EP-A-2 679 413 describes a similar air maintenance tire comprising a pump assembly, a valve assembly and a filter assembly, wherein the filter assembly is mounted in a pocket in the tire.

### Summary of the Invention

The invention relates to a tire assembly in accordance with claim 1.

Dependent claims refer to preferred embodiments of the invention.

The invention provides in a first aspect a tire assembly having a tire having a tread portion and a pair of sidewalls extending radially inward from the tread portion to join with a respective bead. The tire has a supporting carcass for the tread portion and sidewalls. A pump passageway is positioned within a bending region of the tire, the pump passageway being operative to open and close as the tire rotates. A valve assembly is in fluid communication with the pump passageway. The tire has a pocket and a filter assembly is mounted in the pocket. The filter assembly is in air flow communication with the valve assembly, wherein the area of the pocket is 10-40% larger than the area of the filter assembly.

The invention provides in a second aspect a tire assembly comprising a tire having a tread portion and a pair of sidewalls extending radially inward from the tread portion to join with a respective bead and a supporting carcass for the tread portion and sidewalls. A pump passageway positioned within a bending region of the tire, the pump passageway being operative to open and close as the tire rotates, and a valve assembly in fluid communication with the pump passageway. Furthermore, the assembly comprises a pocket formed in the tire and a filter assembly mounted in the pocket, said filter assembly being in air flow communication with the valve assembly, wherein the filter assembly is formed of a housing and a cover, wherein the cover has one or more holes for communicating air into the housing, and wherein the cover is connected to the housing, the housing having an interior cavity having a filter media housed therein and a hole in fluid communication with the valve assembly, wherein a preferably flexible collar surrounds the cover.

In a preferred aspect of either of these aspects of the invention, the area of the pocket is 10-30% or 20-30% larger than the area of the filter housing.

In a preferred aspect of either of these aspects of the invention, the filter assembly has the shape of an ellipse.

In a preferred aspect of either of these aspects of the invention, the ellipse has a major axis and a minor axis, wherein the minor axis of the filter assembly is aligned with the radial direction of the tire.

In a preferred aspect of either of these aspects of the invention, the pocket is formed in the sidewall of the tire.

In a preferred aspect of either of these aspects of the invention, the pocket has a bottom surface, wherein the bottom surface has a hole connected to a channel formed in the tire wall, wherein the hole is in fluid communication with the valve assembly through the channel.

In a preferred aspect of either of these aspects of the invention, the pocket is elliptical in shape, and having a minor axis aligned with the radial direction of the tire.

In a preferred aspect of either of these aspects of the invention, the valve assembly has an inlet, wherein the filter assembly has an outlet, wherein a tube connects the filter outlet assembly to the inlet of the valve assembly.

In a preferred aspect of either of these aspects of the invention, the tube is made of polyurethane.

In a preferred aspect of either of these aspects of the invention, the tube has barbs on each end for a quick connection.

In a preferred aspect of either of these aspects of the invention, the tube has quick connects on each end.

In a preferred aspect of either of these aspects of the invention, the tube has pressure fittings on each end for a quick connection.

In a preferred aspect of either of these aspects of the invention, the filter assembly is formed of a housing and a cover, wherein the cover has one or more holes for communicating air with the housing, wherein the cover is connected to the housing, the housing having an interior cavity for receiving the filter media, the housing having a hole for fluid communication with the valve assembly, wherein a flexible collar surrounds the cover.

In a preferred aspect of either of these aspects of the invention, the flexible collar is made of rubber.

In a preferred aspect of either of these aspects of the invention, the cross-sectional shape of the collar is U-shaped.

In a preferred aspect of either of these aspects of the invention, the minor axis of the filter assembly is in the range of 10% to 50% smaller than the minor axis of the pocket.

In a preferred aspect of either of these aspects of the invention, the minor axis of the filter assembly is in the range of 15% to 30% smaller than the minor axis of the pocket.

In a preferred aspect of either of these aspects of the invention, the filter media is a porous membrane.

In a preferred aspect of either of these aspects of the invention, the flexible collar has an inner hole for reception about the outer surface of the cover, and an outer surface of the flexible collar is secured within a slot of the sidewall of the pocket.

### Brief Description of the Drawings

The invention will be described by way of example and with reference to the accompanying drawings in which:
FIG. 1 is a front view of tire and rim assembly with a pump, valve and filter assembly;
FIG. 2 is a cross sectional view of a truck tire having a groove in the bead area of the tire;
FIG. 3 is a close up cross-sectional view of the truck tire bead area of FIG. 2 illustrating the pump passageway;
FIG. 4 is a close up cross-sectional view of the truck tire bead area illustrating a filter pocket;
FIG. 5 is a front view of a filter pocket shown in the bead area of the tire;
FIG. 6 is an exploded view of a filter assembly, regulator and tire bead area;
FIG. 7 is a cross-sectional view of the portion of the tire illustrating the filter assembly in the pocket of the tire bead area;
FIG. 8 is a front view of the filter assembly installed in the tire;
FIG. 9 is a front perspective view of the filter assembly;
FIG. 10 is a side cross-sectional view of the filter assembly;
FIG. 11 is a perspective view of the filter housing; and
Fig. 12 is a cut away view of the filter housing.

### Detailed Description of Example Embodiments the Invention

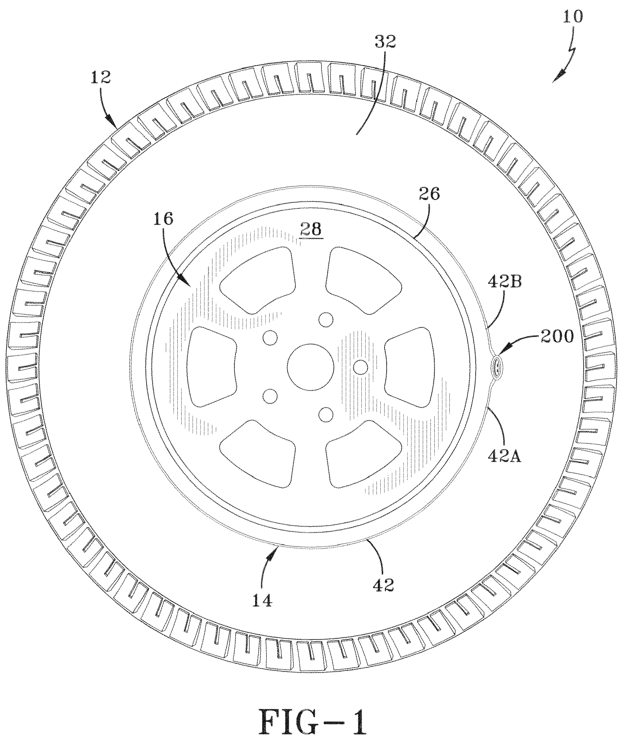

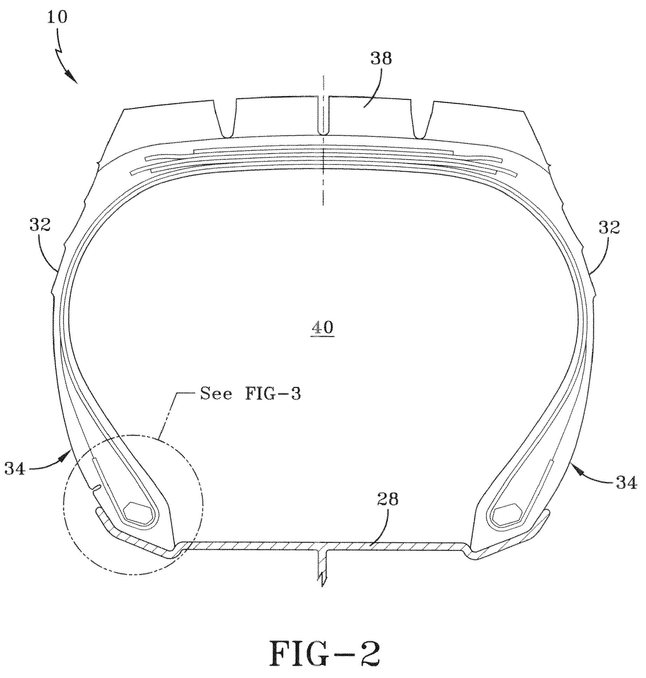

Referring to FIGS. 1 and 2, a tire assembly 10 is disclosed including a tire 12 and a pump assembly 14. The tire mounts in a conventional fashion to a wheel 16 having outer rim flanges 26. An annular rim body 28 joins the rim flanges 26 and supports the tire assembly as shown. The tire is preferably of conventional construction, having a pair of sidewalls 32 extending from opposite bead areas 34 to a crown or tire tread region 38. The tire and rim enclose an interior tire cavity 40 which may be filled with air.

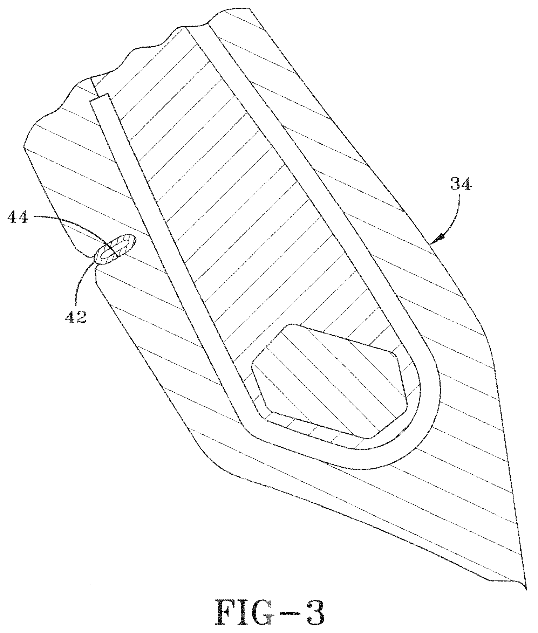

As shown in FIGS. 1 and 3, the tire assembly includes a pump assembly 14 having a pump passageway 42 that is mounted or located in the tire in a channel 44, preferably near the bead region 34 of the sidewall. The pump passageway 42 may be formed of a discrete tube made of a resilient, flexible material such as plastic, elastomer or rubber compounds, and is capable of withstanding repeated deformation cycles when the tube is deformed into a flattened condition subject to external force and, upon removal of such force, returns to an original condition. The tube is of a diameter sufficient to operatively pass a volume of air sufficient for the purposes described herein and allowing a positioning of the tube in an operable location within the tire assembly as will be described. Preferably, the tube has an elliptical cross-sectional shape, although other shapes such as round may be utilized.

The pump passageway itself may also be integrally formed or molded into the sidewall of the tire during vulcanization, eliminating the need for an inserted tube. An integrally formed pump passageway is preferably made by building into a selected green tire component such as a chafer, a removable strip made of wire or silicone. The component is built into the tire and cured. The removable strip is then removed post cure to form a molded in or integrally formed pump air passageway.

Hereinafter, the term "pump passageway" refers either to installed tubes or an integrally molded in passageway. The location selected for the pump passageway within the tire may be within a tire component residing within a high flex region of the tire, sufficient to progressively collapse the internal hollow air passageway as the tire rotates under load thereby conveying air along the air passageway from the inlet to the pump outlet.

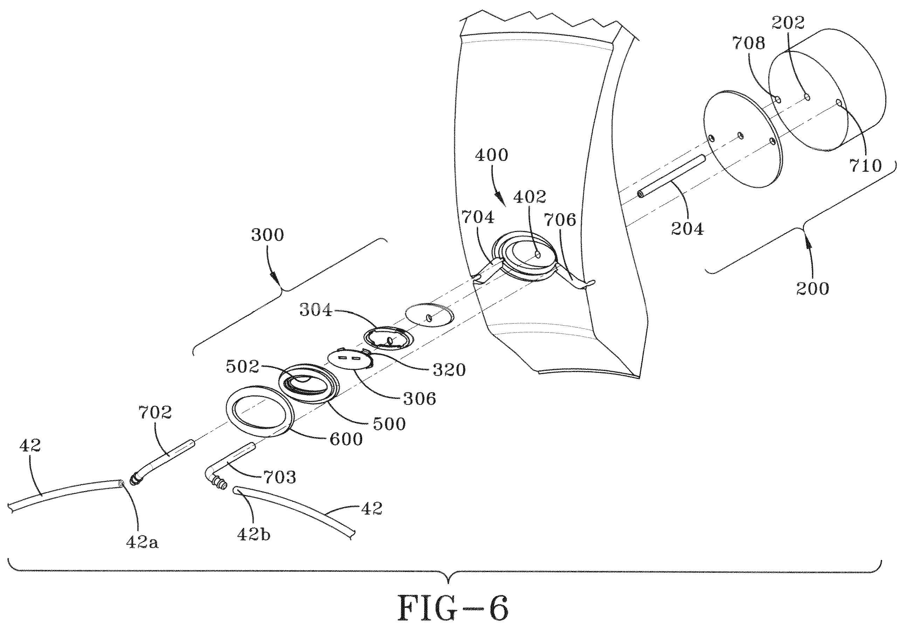

The pump air passageway 42 has an inlet end 42A and an outlet end 42B joined together by a valve system 200, as shown in Figures 1, 6. Examples of pressure regulators or valve systems suitable for use with the invention are disclosed in U.S. Application Serial Nos. 13/221,231, 13/221,433 and 13/221,506. As shown in this particular example, the inlet end 42A and the outlet end 42B are spaced apart approximately 360 degrees forming an annular pump assembly. However, the inlet and outlet ends may be spaced apart 90°, 180°, etc.

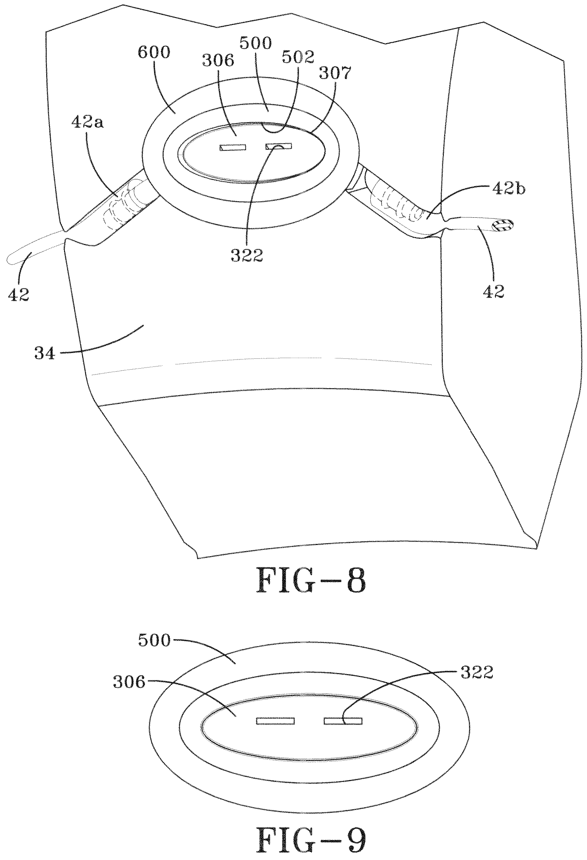

The valve assembly 200 is preferably affixed to the inside of the tire, near the bead area. The valve assembly 200 has an inlet port 202 that is in fluid communication with a central air conduit 204. The central air conduit 204 is in fluid communication with an air filter assembly 300, as shown in Figures 6-8. The central air conduit is preferably a flexible tube or passageway that extends from a filter housing to the inlet port 202 of the valve assembly 200.

The valve assembly 200 is operable to control the amount of inlet air to the pump system 42. If the tire cavity pressure falls below a set trigger pressure, the valve device allows air to enter the valve assembly 200 through inlet port 202, and then through to the pump passageway 42. The valve assembly 200 may allow airflow into the pump system through an air inlet port. The valve assembly 200 also may control the flow of air from the pump into the tire cavity, as well as prevent cavity air from back flowing into the pump passageways.

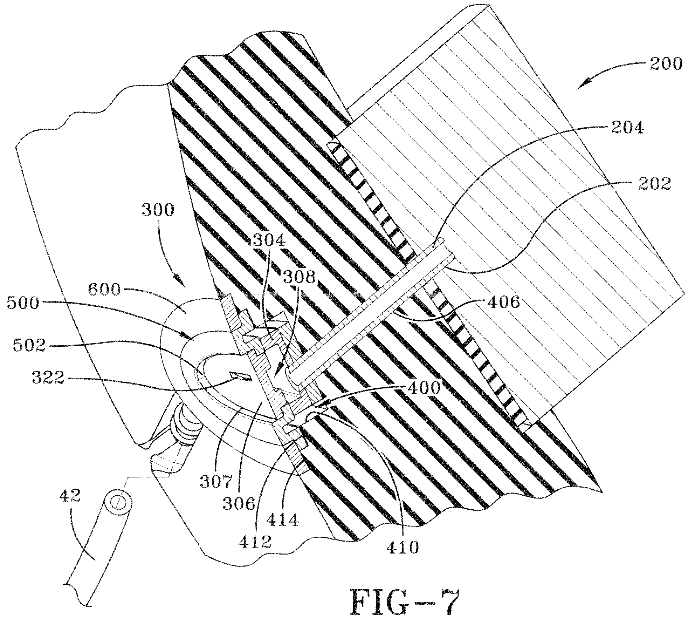

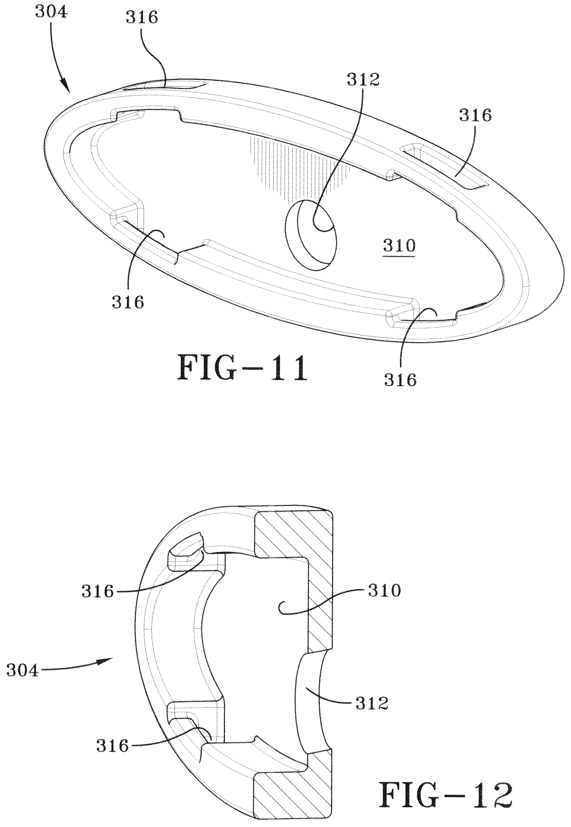

The air filter assembly 300 is preferably positioned on the outer sidewall of the tire, in the vicinity of the pump passageways, as shown in Figures 6-8. However, other locations may be used. The air filter assembly filters the outside air and communicates the filtered air to the inlet port 202 of the valve assembly 200. The air filter assembly 300 has a housing 304, and a cover 306 which assemble together to form an internal cavity 308. The filter housing 304 is shown in Figures 7, 10, 11 and 12. The filter housing 304 is also preferably elliptical in shape, with the minor axis aligned with the radial direction of the tire. The bottom surface 310 of the filter housing has a hole 312 for reception of a first end of the central air conduit 204. The filter housing has a sidewall having cutouts 316. Tabular ends 320 of the cover 306 are received in the cutouts 316 to attach the cover to the filter housing. The front face of the cover has one or more holes 322. The filter housing 304 and cover 306 may be made of hard plastic or metal.

One or more layers of filter media 550 is received in the internal cavity 308 of the filter assembly 300. The filter media may be a woven or nonwoven fiber, foam, spun fiberglass, charcoal, or other materials known to those skilled the art. Alternatively, a membrane such as PTFE Gore-Tex® may be used, alone or in combination with the filter media.

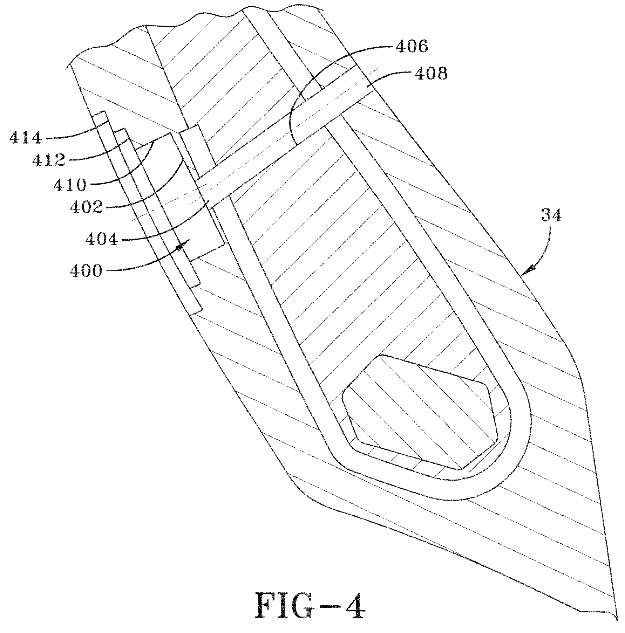

The air filter assembly 300 is mounted in a pocket 400 formed on the outer surface of the tire, typically in the sidewall area near the pump passageways. The pocket 400 is shown in Figures 4-6. The pocket may be molded in the tire (not shown), or formed in a vulcanized tire, post cure by laser cutting.

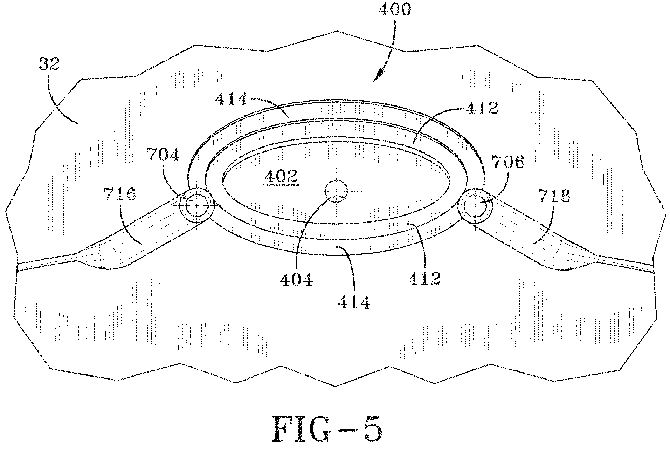

As shown in Figure 5, the general shape of the pocket 400 is curved, with no corners to eliminate stress concentrations. It is preferred that the pocket is also elliptical in shape, with the minor axis of the ellipse aligned with the radial direction of the tire. The pocket may also be round. The depth of the pocket is preferably 5-15 mm, the major axis width is preferably 20-40 mm, and the minor axis width is preferably 8-15 mm. The pocket has a bottom surface 402 having a hole 404 that is connected to the passageway 406 formed through the tire to the tire cavity, so that fluid may communicate from the hole 404 in the pocket to the passageway exit 408. An optional central air conduit 204 is positioned in the passageway 406 to communicate filtered air to the valve assembly 200. Alternatively, the passageway 406 may be used to communicate fluid to the cavity from the pocket.

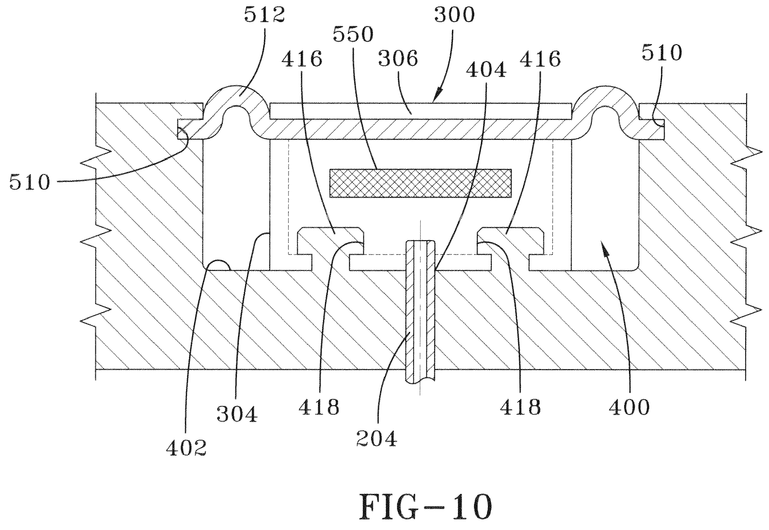

The bottom surface 402 of the pocket may further optionally include molded in attachment knobs 416 as shown in Figure 10. The attachment knobs 416 may be used to secure a filter housing to the pocket. The bottom of the filter housing may have recesses 418 which allow the knobs 416 to snap inside, as shown in Figure 10. Alternatively, the filter housing may have knobs (not shown) which are secured into recesses of the pocket (not shown).

The pocket 400 further includes a sidewall 410. The sidewall 410 is surrounded by a first and second ledge 412, 414 joined together. A preferably flexible collar 500 has an interior hole 502 wherein the interior hole is positioned around the outer circumferential edge 307 of the cover 306. The flexible collar 500 has a second end positioned on the first ledge 412. Alternatively, the second end may be positioned in a slot 510 formed in the sidewall of the pocket, as shown in Figure 10. The cross-sectional profile 512 of the flexible collar may be U shaped. The flexible collar allows for the +/- 10% sidewall strain seen in tire service while protecting the filter media from flexing. The flexible collar 500 is made from a flexible material such as rubber.

A green (unvulcanized) rubber ring 600 has an inner hole that is positioned about the outer circumference of the flexible collar 500 and wherein the outer portion of the rubber ring is positioned on the second, outer ledge 414. The green rubber ring 600 has an inner side which is coated with a suitable adhesive as described below. The green rubber ring 600 is then cured over the flexible collar and affixed to the sidewall of the tire. The green rubber ring 600 may be cured by heat.

As shown in Figures 7 and 10, the filter housing major axis dimension and minor axis dimension is smaller than the pocket internal cavity 308, such that there is a gap surrounding the filter housing. The spatial gap can be in the range of 2 mm to 8 mm. Thus the filter housing major axis dimension may be in the range of 10% to 50% smaller than the pocket major axis dimension, and more preferably, 20-30% smaller than the pocket major axis dimension.

The bottom of the filter housing is attached to the pocket bottom surface 402 by using one or more strips of green unvulcanized rubber which are coated with a suitable adhesive on both sides. The adhesive may be heat cured or cured at room temperature. One suitable adhesive is Fast Dry Self-vulcanizing Cement made by the Rubber Patch Company.

Adjacent the pocket are two holes 704, 706 as shown in Figure 5. The holes 704, 706 extend through the sidewall of the tire and are in fluid communication with aligned holes 708, 710 of the regulator. Pump tubes 702, 703 having a first that are inserted through holes 704, 706 and into regulator holes 708, 710. Pump tubes 702, 703 preferably have quick connect ends such as barbs, etc so that the system may be easily assembly. Pump tubes 702, 703 are preferably made of high strength polyurethane. Pump tubes have a second end that are bent about 90°. The second ends are inserted into slots 716, 718 formed adjacent the pocket. The second ends of the pump tubes connect to a continuous pump passageway 42.

The pump passageway is connected to the second ends of the pump tubes, and then the pump passageway is inserted into channel 44. Preferably, the pump passageway is coated with rubber cement and then inserted into the pump passageway. A green cover strip of rubber having an inner surface is first coated with rubber cement and then is placed over the pump passageway in the annular channel. Heat may be used to cure the rubber cement.

## Claims

1. A tire assembly comprising a tire (12) having a tread portion (38), a pair of sidewalls (32) extending radially inward from the tread portion (38) to join with a respective bead area (34) and a supporting carcass for the tread portion (38) and sidewalls (32), the tire assembly (10) further comprising a pump passageway (42) positioned within a bending region of the tire (12), the pump passageway (42) being operative to open and close as the tire (12) rotates, a valve assembly (200) in fluid communication with the pump passageway (42), a pocket (400) formed in the tire (12) and a filter assembly (300) mounted in the pocket (400), wherein the filter assembly (300) is in air flow communication with the valve assembly (200), **characterized in that**
(i) the filter assembly (300) is formed of a housing (304) and a cover (306), the cover having one or more holes (322) for communicating air into the housing (304), wherein the cover (306) is connected to the housing (304), the housing (304) having an interior cavity (308) having a filter media (550) housed therein, wherein the housing (304) has a hole (312) in fluid communication with the valve assembly (200), and wherein a preferably flexible collar (500) surrounds the cover (306); or **in that**
(ii) the pocket (400) has an area 10 to 40% larger than the area of a filter housing (304).

2. The tire assembly of claim 1 wherein the tire assembly (10) has the features of option (ii) and wherein the area of the pocket (400) is 10-30% larger than the area of the filter housing (304).

3. The tire assembly of claim 1 or 2 wherein the tire assembly (10) has the features of option (i) or (ii) and wherein the filter assembly (300) has the shape of an ellipse.

4. The tire assembly of claim 3 wherein the ellipse has a major axis and a minor axis, and wherein the minor axis of the filter assembly (300) is aligned with the radial direction of the tire.

5. The tire assembly of at least one of the previous claims wherein the pocket (400) is formed in the sidewall (32) of the tire (12).

6. The tire assembly of at least one of the previous claims wherein the pocket (400) has a bottom surface (402), wherein the bottom surface (402) has a hole (404) connected to a channel (406) formed in the tire wall, and wherein the hole (404) is in fluid communication with the valve assembly (200) through the channel (406).

7. The tire assembly of at least one of the previous claims wherein the valve assembly (200) has an inlet (202), wherein the filter assembly (300) has an outlet, and wherein a tube (702, 703) connects the filter outlet to the inlet (202) of the valve assembly (200).

8. The tire assembly of claim 7 wherein the tube (702, 703) is made of polyurethane.

9. The tire assembly of claim 7 or 8 wherein the tube (702, 703) has barbs on at least one or both of its ends for a quick connection; and/or wherein the tube (702, 703) has quick connects on each end or on at least one of its ends.

10. The tire assembly of claim 7, 8 or 9 wherein the tube (702, 703) pressure fittings for a quick connection on each end or on at least one of its ends.

11. The tire assembly of at least one of the previous claims wherein the tire assembly has the features of option (i) and the preferably flexible collar (500) is made of rubber.

12. The tire assembly of at least one of the previous claims wherein the tire assembly has the features of option (i) and the cross-sectional shape of the collar (500) is U-shaped.

13. The tire assembly of at least one of the previous claims wherein the minor axis of the filter assembly (300) is in the range of 10% to 50% smaller, alternatively 15% to 30% smaller, than the minor axis of the pocket (400)

14. The tire assembly of at least one of the previous claims wherein the filter media (550) is a porous membrane.

15. The tire assembly of at least one of the previous claims wherein the tire assembly has the features of option (i) and the collar (500) has an inner hole for reception about the outer surface of the cover (306), and an outer surface of the collar (500) is secured within a slot (510) of the sidewall (410) of the pocket (400).

## Patentansprüche

1. Reifenanordnung, umfassend einen Reifen (12) mit einem Laufflächenteil (38), einem Paar Seitenwände (32), die sich von dem Laufflächenteil (38) radial einwärts erstrecken, um an einen jeweiligen Wulstbereich (34) anzuschließen, und einer tragenden Karkasse für den Laufflächenteil (38) und die Seitenwände (32), wobei die Reifenanordnung (10) weiter einen in einem Biegebereich des Reifens (12) angeordneten Pumpendurchgang (42) umfasst, wobei der Pumpendurchgang (42) so wirksam ist, dass er sich öffnet und schließt, wenn der Reifen (12) rotiert, eine Ventilanordnung (200) in Fluidkommunikation mit dem Pumpendurchgang (42), ein in dem Reifen (12) gebildetes Fach (400) und eine in dem Fach (400) montierte Filteranordnung (300), wobei die Filteranordnung (300) in Luftstromkommunikation mit der Ventilanordnung (200) steht, **dadurch gekennzeichnet, dass**
(i) die Filteranordnung (300) aus einem Gehäuse (304) und einer Abdeckung (306) gebildet ist, wobei die Abdeckung eine oder mehrere Öffnungen (322) zum Kommunizieren von Luft in das Gehäuse (304) aufweist, wobei die Abdeckung (306) mit dem Gehäuse (304) verbunden ist, wobei das Gehäuse (304) einen inneren Hohlraum (308) mit einem darin untergebrachten Filtermedium (550) aufweist, wobei das Gehäuse (304) eine Öffnung (312) in Fluidkommunikation mit der Ventilanordnung (200) aufweist, und wobei ein bevorzugt flexibler Kragen (500) die Abdeckung (306) umgibt; oder dass
(ii) das Fach (400) einen Flächeninhalt aufweist, der 10 bis 40% größer ist als der Flächeninhalt eines Filtergehäuses (304).

2. Reifenanordnung nach Anspruch 1, wobei die Reifenanordnung (10) die Merkmale von Option (ii) aufweist und wobei der Flächeninhalt des Fachs (400) 10-30% größer ist als der Flächeninhalt des Filtergehäuses (304).

3. Reifenanordnung nach Anspruch 1 oder 2, wobei die Reifenanordnung (10) die Merkmale von Option (i) oder (ii) aufweist und wobei die Filteranordnung (300) die Form einer Ellipse hat.

4. Reifenanordnung nach Anspruch 3, wobei die Ellipse eine Hauptachse und eine Nebenachse aufweist und wobei die Nebenachse der Filteranordnung (300) zu der radialen Richtung des Reifens ausgerichtet ist.

5. Reifenanordnung nach mindestens einem der vorhergehenden Ansprüche, wobei das Fach (400) in der Seitenwand (32) des Reifens (12) gebildet ist.

6. Reifenanordnung nach mindestens einem der vorhergehenden Ansprüche, wobei das Fach (400) eine Bodenfläche (402) aufweist, wobei die Bodenfläche (402) eine mit einem in der Reifenwand geformten Kanal (406) verbundene Öffnung aufweist, und wobei die Öffnung (404) durch den Kanal (406) in Fluidkommunikation mit der Ventilanordnung (200) steht.

7. Reifenanordnung nach mindestens einem der vorhergehenden Ansprüche, wobei die Ventilanordnung (200) einen Einlass (202) aufweist, wobei die Filteranordnung (300) einen Auslass aufweist, und wobei ein Schlauch (702, 703) den Filterauslass mit dem Einlass (202) der Ventilanordnung (200) verbindet.

8. Reifenanordnung nach Anspruch 7, wobei der Schlauch (702, 703) aus Polyurethan hergestellt ist.

9. Reifenanordnung nach Anspruch 7 oder 8, wobei der Schlauch (702, 703) Widerhaken an mindestens einem oder beiden seiner Enden für eine rasche Verbindung aufweist; und/oder wobei der Schlauch (702, 703) an jedem Ende oder an mindestens einem seiner Enden Schnellkupplungen aufweist.

10. Reifenanordnung nach Anspruch 7, 8 oder 9, wobei der Schlauch (702, 703) an jedem Ende oder an mindestens einem seiner Enden Druckstücke für eine rasche Verbindung aufweist.

11. Reifenanordnung nach mindestens einem der vorhergehenden Ansprüche, wobei die Reifenanordnung die Merkmale von Option (i) aufweist und der bevorzugt flexible Kragen (500) aus Gummi hergestellt ist.

12. Reifenanordnung nach mindestens einem der vorhergehenden Ansprüche, wobei die Reifenanordnung die Merkmale von Option (i) aufweist und die Querschnittsform des Kragens (500) U-förmig ist.

13. Reifenanordnung nach mindestens einem der vorhergehenden Ansprüche, wobei die Nebenachse der Filteranordnung (300) im Bereich von 10% bis 50% kleiner, alternativ 15% bis 30% kleiner, als die Nebenachse des Fachs (400) ist.

14. Reifenanordnung nach mindestens einem der vorhergehenden Ansprüche, wobei das Filtermedium (550) eine poröse Membran ist.

15. Reifenanordnung nach mindestens einem der vorhergehenden Ansprüche, wobei die Reifenanordnung die Merkmale von Option (i) aufweist und der Kragen (500) eine innere Öffnung zur Aufnahme um die Außenfläche der Abdeckung (306) aufweist, und eine Außenfläche des Kragens (500) in einem Schlitz (510) der Seitenwand (410) des Fachs (400) gesichert ist.

## Revendications

1. Assemblage de bandage pneumatique comprenant un bandage pneumatique (12) possédant une portion faisant office de bande de roulement (38), une paire de flancs (32) s'étendant en direction radiale à l'intérieur de la portion (38) faisant office de bande de roulement pour se joindre à une zone de talon respective (34), et une carcasse de support pour la portion (38) faisant office de bande de roulement et pour les flancs (32), l'assemblage de bandage pneumatique (10) comprenant en outre une voie de passage de pompe (42) qui est disposée au sein d'une zone de flexion du bandage pneumatique (12), la voie de passage de pompe (42) étant opérationnelle pour s'ouvrir et se fermer lors de la rotation du bandage pneumatique (12), un assemblage de valve (200) en communication par fluide avec la voie de passage de pompe (42), une poche (400) formée dans le bandage pneumatique (12) et un assemblage de filtre (300) monté dans la poche (400), dans lequel l'assemblage de filtre (300) est mis en communication par écoulement de l'air avec l'assemblage de valve (200), **caractérisé en ce que**
(i) l'assemblage de filtre (300) est formé à l'aide d'un logement (304) et d'un recouvrement (306), le recouvrement possédant un ou plusieurs trous (322) à des fins de communication par air avec le logement (304), dans lequel le recouvrement (306) est relié au logement (304), le logement (304) possédant une cavité interne (308) dans laquelle est logé un milieu filtrant (550), dans lequel le logement (304) possède un trou (312) mis en communication par fluide avec l'assemblage de valve (200) et dans lequel une bague (500) de préférence flexible entoure le recouvrement (306) ; ou **en ce que**
(ii) la poche (400) possède une aire de surface supérieure à concurrence de 10 à 40 % à l'aire de surface du logement de filtre (304).

2. Assemblage de bandage pneumatique selon la revendication 1, dans lequel l'assemblage de bandage pneumatique (10) possède les caractéristiques de l'option (i) et dans lequel l'aire de surface de la poche (400) est supérieure à concurrence de 10 à 30 % à l'aire de surface du logement de filtre (304).

3. Assemblage de bandage pneumatique selon la revendication 1 ou 2, dans lequel l'assemblage de bandage pneumatique (10) possède les caractéristiques de l'option (i) ou (ii) et dans lequel l'assemblage de filtre (300) possède la configuration d'une ellipse.

4. Assemblage de bandage pneumatique selon la revendication 3, dans lequel l'ellipse possède un grand axe et un petit axe, et dans lequel le petit axe de l'assemblage de filtre (300) est mis en alignement avec la direction radiale du bandage pneumatique.

5. Assemblage de bandage pneumatique selon au moins une des revendications précédentes, dans lequel la poche (400) est formée dans le flanc (32) du bandage pneumatique (12).

6. Assemblage de bandage pneumatique selon au moins une des revendications précédentes, dans lequel la poche (400) possède une surface de base (402), dans lequel la surface de base (402) possède un trou (404) relié à un canal (406) formé dans la paroi du bandage pneumatique, et dans lequel le trou (404) est mis en communication par fluide avec l'assemblage de valve (200) via le canal (406).

7. Assemblage de bandage pneumatique selon au moins une des revendications précédentes, dans lequel l'assemblage de valve (200) possède une entrée, dans lequel l'assemblage de filtre (300) possède une sortie et dans lequel un tube (702, 703) relie la sortie du filtre à l'entrée (202) de l'assemblage de valve (200).

8. Assemblage de bandage pneumatique selon la revendication 7, dans lequel le tube (702, 703) est réalisé en polyuréthane.

9. Assemblage de bandage pneumatique selon la revendication 7 ou 8, dans lequel le tube (702, 703) comporte des barbes sur au moins une de ses extrémités ou sur ses deux extrémités pour une connexion rapide et/ou dans lequel le tube (702, 703) possède des raccords instantanés sur chacune de ses extrémités ou sur au moins une de ses extrémités.

10. Assemblage de bandage pneumatique selon la revendication 7, 8 ou 9, dans lequel le tube (702, 703) comporte des raccords à pression pour une connexion rapide sur chacune de ses extrémités ou sur au moins une de ses extrémités.

11. Assemblage de bandage pneumatique selon au moins une des revendications précédentes, dans lequel l'assemblage de bandage pneumatique possède les caractéristiques de l'option (i) et la bague de préférence flexible (500) est réalisée en caoutchouc.

12. Assemblage de bandage pneumatique selon au moins une des revendications précédentes, dans lequel l'assemblage de bandage pneumatique possède les caractéristiques de l'option (i) et la configuration de la section transversale de la bague (500) prend la forme d'un U.

13. Assemblage de bandage pneumatique selon au moins une des revendications précédentes, dans lequel le petit axe de l'assemblage de filtre (300) est inférieur, dans la plage de 10% à 50 %, en variante inférieur à concurrence de 15 à 30 %, au petit axe de la poche (400).

14. Assemblage de bandage pneumatique selon au moins une des revendications précédentes, dans lequel le milieu filtrant (550) est une membrane poreuse.

15. Assemblage de bandage pneumatique selon au moins une des revendications précédentes, dans lequel l'assemblage de bandage pneumatique possède les caractéristiques de l'option (i) et la bague (500) possède un trou interne de réception autour de la surface externe du recouvrement (306), et la surface externe de la bague (500) est fixée au sein d'une fente (510) du flanc (410) de la poche (400).
